# EUROPEAN PATENT APPLICATION

(11) **EP 4 852 401 A1**
(43) Date of publication of application: **09.12.2026**
(21) Application number: 25757708.0
(22) Date of filing: 18.02.2025
(51) Int. Cl.: H04L 49/901

(54) **DATA PROCESSING METHOD, APPARATUS AND COMPUTING DEVICE**

(30) Priority: 23.02.2024 CN 202410205867
(71) Applicant: HUAWEI TECHNOLOGIES CO., LTD., Shenzhen, Guangdong 518129 (CN)
(72) Inventor: QU, Xiangfeng, Shenzhen, Guangdong 518129 (CN); LI, Bing, Shenzhen, Guangdong 518129 (CN); JIANG, Chen, Shenzhen, Guangdong 518129 (CN)
(74) Representative: Huawei European IPR
(86) International application number: PCT/CN2025/077818
(87) International publication number: WO 2025/176116

(57) **Abstract**

This application provides a data processing method and apparatus, and a compute device. The method includes: A first compute device obtains one or more task descriptors, where each task descriptor includes address information of data to be transmitted by the first compute device to a second compute device; after selecting a first TP connection from TP connections established between the first compute device and the second compute device to transmit the to-be-transmitted data, when determining that the first TP connection is not associated with a TPQ, selects a first TPQ from idle TPQs or creates a first TPQ; then establishes an association between the first TP connection and the first TPQ; and buffers the one or more task descriptors into the first TPQ. The compute device configures the TPQ for the TP connection only when the TPQ is required to buffer the task descriptor. This can prevent the TP connection from occupying TPQ resources when no task is executed, avoid a problem that the TPQ occupies excessive storage resources, and improve storage resource utilization.

## Description

This application claims priority to Chinese Patent Application No. 202410205867.4, filed with the China National Intellectual Property Administration on February 23, 2024 and entitled "DATA PROCESSING METHOD AND APPARATUS, AND COMPUTE DEVICE", which is incorporated herein by reference in its entirety.

### TECHNICAL FIELD

This application relates to the field of computer technologies, and in particular, to a data processing method and apparatus, and a compute device.

### BACKGROUND

In a network based on a unified bus (unified bus, UB) protocol, one or more transport (transport, TP) connections need to be established between two compute devices that communicate with each other. Since one compute device communicates with a plurality of compute devices, the one compute device can establish TP connections to the plurality of compute devices. Each of the TP connections needs to be allocated a transport queue (transport queue, TPQ) to buffer task descriptors corresponding to the TP connection. If a large quantity of TP connections are established between one compute device and other compute devices, TPQs in the compute device will occupy a large quantity of storage resources of the compute device.

### SUMMARY

This application provides a data processing method and apparatus, and a compute device, to reduce storage resource occupation of a TPQ in a network that is based on a UB protocol, and improve storage resource utilization.

According to a first aspect, this application provides a data processing method, applied to a network including a plurality of compute devices. One or more TP connections are established between any two of the plurality of compute devices, and the TP connection is used for communication between the two compute devices. The method includes:

When a first compute device needs to transmit to-be-transmitted data to a second compute device, the first compute device selects a first TP connection from TP connections established between the first compute device and the second compute device to transmit the to-be-transmitted data, and then the first compute device determines whether the first TP connection is associated with a TPQ. If the first compute device determines that the first TP connection is not associated with any TPQ, the first compute device establishes an association between the first TP connection and a first TPQ, and then buffers one or more task descriptors into the first TPQ. The first TPQ is one of one or more TPQs that have been created by the first compute device or the first TPQ is a TPQ created by the first compute device based on a required capacity. The required capacity is a capacity required by the first compute device to buffer the one or more task descriptors. Each task descriptor includes address information of the to-be-transmitted data. The first compute device and the second compute device are among the plurality of compute devices.

According to the foregoing method, the compute device configures one or more TPQs for a TP connection only when the compute device needs to communicate with another compute device via the TP connection to complete a task, and associates the one or more TPQs with the TP connection. That is, each TP connection is not fixedly associated with a TPQ. In addition, each time it is determined whether one TP connection is associated with a TPQ, it indicates that after each TP connection is associated with a TPQ, the first compute device also disassociates the TP connection from the TPQ. This can prevent a TP connection from occupying TPQ resources when no task is executed, avoid a problem that the TPQ occupies excessive storage resources, and improve storage resource utilization. The compute device in embodiments of the present invention may also be referred to as a host, a compute node, a compute module, or the like, and is an apparatus, a chip, or a module that has a computing capability.

In a possible implementation, the first compute device determines whether the first TP connection is associated with the TPQ. If the first compute device determines that the first TP connection is associated with a second TPQ, the first compute device obtains a storage capacity of the second TPQ. If the storage capacity of the second TPQ is less than the required capacity, the first compute device establishes the association between the first TP connection and the first TPQ, and buffers the one or more task descriptors into the first TPQ.

Alternatively, the first TP connection may have been associated with the TPQ. In this case, the first compute device first confirms whether the storage capacity of the second TPQ currently associated with the first TP connection can buffer the one or more task descriptors. If the second TPQ cannot be used to buffer the one or more task descriptors, the first compute device replaces the second TPQ with the first TPQ with a larger storage capacity, so that the first compute device can continue to transmit the to-be-transmitted data via the first TP connection. According to the foregoing method, each TP connection is not fixedly associated with a TPQ, so that a TPQ associated with the TP connection can be flexibly adjusted, and a delay caused by a change of a TP connection of a task because a storage capacity of a TPQ associated with the TP connection is small and cannot buffer a plurality of task descriptors corresponding to the task is avoided.

In a possible implementation, before the first compute device establishes the association between the first TP connection and the first TPQ, the method further includes: The first compute device deletes configuration information that is of the second TPQ and that is recorded in a first transport context (TP context, TPC) corresponding to the first TP connection. Each TP connection is associated with a TPC, the TPC is used to record configuration information of a TPQ associated with the corresponding TP connection, and the configuration information includes a start address and a storage capacity of the TPQ.

In a possible implementation, the first compute device establishes N TP connections to another compute device, and creates M TPQs, where M is less than N, and the first TPQ and the second TPQ are among the M TPQs. Establishing the association between the first TP connection and the first TPQ includes: The first compute device obtains TPQs in an idle state, determines the first TPQ based on the required capacity and a storage capacity of each TPQ in the idle state, and then writes the configuration information of the first TPQ into the first TPC corresponding to the first TP connection, to associate the first TP connection with the first TPQ. A storage capacity of the first TPQ is greater than or equal to the required capacity, and the TPQ in the idle state is a TPQ that is not associated with a TP connection. Each TP connection corresponds to a TPC, the TPC is used to record the configuration information of the TPQ associated with the corresponding TP connection, and the configuration information includes the start address and the storage capacity of the TPQ.

The first compute device may create the TPQs when establishing the TP connections to another compute device. When a TPQ needs to be used to buffer a task descriptor, the first compute device selects, based on a required capacity of the task descriptor that needs to be buffered, a TPQ whose storage capacity is greater than the required capacity, and then associates the TPQ with a TP connection. The TP connection can be associated with the TPQ by writing configuration information of the TPQ into a TPC associated with the TP connection during association.

In a possible implementation, establishing the association between the first TP connection and the first TPQ includes: The first compute device creates the first TPQ based on the required capacity of one or more task descriptors, and writes configuration information of the first TPQ into the first TPC corresponding to the first TP connection.

In this application, when a TPQ needs to be used to buffer a task descriptor, the first compute device may alternatively create, based on a required capacity of the task descriptor that needs to be buffered, a TPQ whose storage capacity is greater than the required capacity, and then associate the TPQ with a TP connection. The TP connection can be associated with the TPQ by writing configuration information of the TPQ into a TPC associated with the TP connection during association.

In a possible implementation, after the first compute device buffers the one or more task descriptors into the first TPQ, the method further includes: The first compute device reads a task descriptor from the first TPQ, and executes a communication task indicated by the task descriptor; and the first compute device releases the first TPQ upon determining that there is no task descriptor in the first TPQ, to be specific, deletes the configuration information that is of the first TPQ and that is recorded in the first TPC, and removes the association between the first TP connection and the first TPQ.

After a task indicated by a task descriptor in a TPQ is completed, the compute device can release the TPQ, so that another TP connection can use the TPQ. This can prevent the TP connection from occupying the TPQ resources when no task is executed, avoid the problem that the TPQ occupies the excessive storage resources, and improve storage resource utilization.

In a possible implementation, after the first compute device buffers the one or more task descriptors into the first TPQ, the method further includes: The first compute device determines that there is no task descriptor in the first TPQ and a first quantity of TPQs currently in an idle state is less than a first threshold, and deletes the configuration information that is of the first TPQ and that is recorded in the first TPC.

If a TPQ associated with a TP connection has no buffered task descriptor and a quantity of TPQs currently in the idle state is small, the TPQ that is associated with the TP connection but has no buffered task descriptor is released, so that a TP connection that needs to use the TPQ can find in time the TPQ in an idle state that can be associated. If there is no buffered task descriptor in a TPQ associated with a TP connection and a quantity of TPQs currently in the idle state is large, an association between the TP connection and the TPQ is maintained, so that when the TP connection needs to use the TPQ to buffer a task descriptor again, there is no need to search for an available TPQ for association. This reduces a task execution delay.

In a possible implementation, after the first compute device buffers the one or more task descriptors into the first TPQ, the method further includes: The first compute device determines that there is no task descriptor in the first TPQ and no new task descriptor is buffered in the first TPQ within a first duration, and deletes the configuration information that is of the first TPQ and that is recorded in the first TPC.

If a TPQ associated with a TP connection has no buffered task descriptor and the TPQ has not buffered a task descriptor for a period of time, the TPQ associated with the TP connection but has no buffered task descriptor is released, so that a TP connection that needs to use the TPQ can find in time the TPQ in the idle state that can be associated. If there is no buffered task descriptor in a TPQ associated with a TP connection, but the TP connection may need the TPQ to buffer a task descriptor in a short time, an association between the TP connection and the TPQ is maintained in a period of time, so that when the TP connection needs to use the TPQ to buffer a task descriptor again, there is no need to search for an available TPQ for association. This reduces a task execution delay.

According to a second aspect, this application provides a data processing method, applied to a network including a plurality of compute devices. One or more transport TP connections are established between any two of the plurality of compute devices, and the TP connection is used for communication between the two compute devices. The method includes:

When a first compute device needs to transmit to-be-transmitted data to a second compute device, the first compute device selects a first TP connection from TP connections established between the first compute device and the second compute device to transmit the to-be-transmitted data, and then the first compute device determines whether the first TP connection is associated with a TPQ. If the first compute device determines that the first TP connection is associated with a second TPQ, the first compute device obtains a storage capacity of the second TPQ. If the storage capacity of the second TPQ is less than a required capacity, the first compute device establishes an association between the first TP connection and a first TPQ, and then buffers one or more task descriptors into the first TPQ. The first TPQ is one of one or more TPQs that have been created by the first compute device or the first TPQ is a TPQ created by the first compute device based on the required capacity. The required capacity is a capacity required by the first compute device to buffer the one or more task descriptors.

When the first TP connection has been associated with the TPQ, the first compute device first confirms whether the storage capacity of the second TPQ currently associated with the first TP connection can buffer the one or more task descriptors. If the second TPQ cannot be used to buffer the one or more task descriptors, the first compute device replaces the second TPQ with the first TPQ with a larger storage capacity, so that the first compute device can continue to transmit the to-be-transmitted data via the first TP connection. According to the foregoing method, each TP connection is not fixedly associated with a TPQ, so that a TPQ associated with the TP connection can be flexibly adjusted, and a delay caused by a change of a TP connection of a task because a storage capacity of a TPQ associated with the TP connection is small and cannot buffer a plurality of task descriptors corresponding to the task is avoided.

In a possible implementation, the first compute device establishes N TP connections to another compute device, and creates M TPQs, where M is less than N, and the first TPQ and the second TPQ are among the M TPQs. Establishing the association between the first TP connection and the first TPQ includes: The first compute device obtains TPQs in an idle state, determines the first TPQ based on the required capacity and a storage capacity of each TPQ in the idle state, and then writes configuration information of the first TPQ into a first TPC corresponding to the first TP connection, to associate the first TP connection with the first TPQ. A storage capacity of the first TPQ is greater than or equal to the required capacity, and the TPQ in the idle state is a TPQ that is not associated with a TP connection. Each TP connection corresponds to a TPC, the TPC is used to record configuration information of a TPQ associated with the corresponding TP connection, and the configuration information includes a start address and a storage capacity of the TPQ.

In a possible implementation, establishing the association between the first TP connection and the first TPQ includes: The first compute device creates the first TPQ based on the required capacity of one or more task descriptors, and writes configuration information of the first TPQ into a first TPC corresponding to the first TP connection.

In a possible implementation, before establishing the association between the first TP connection and the first TPQ, the method further includes: The first compute device releases the second TPQ, deletes configuration information that is of the second TPQ and that is recorded in the first TPC, and removes an association between the first TP connection and the second TPQ.

In a possible implementation, after the first compute device buffers the one or more task descriptors into the first TPQ, the method further includes: The first compute device reads a task descriptor from the first TPQ, and executes a communication task indicated by the task descriptor; and the first compute device releases the first TPQ upon determining that there is no task descriptor in the first TPQ, to be specific, deletes the configuration information that is of the first TPQ and that is recorded in the first TPC, and removes the association between the first TP connection and the first TPQ.

After a task indicated by a task descriptor in a TPQ is completed, the compute device can release the TPQ, so that another TP connection can use the TPQ. This can prevent a TP connection from occupying TPQ resources when no task is executed, avoid a problem that the TPQ occupies excessive storage resources, and improve storage resource utilization.

In a possible implementation, after the first compute device buffers the one or more task descriptors into the first TPQ, the method further includes: The first compute device determines that there is no task descriptor in the first TPQ and a first quantity of TPQs currently in an idle state is less than a first threshold, and deletes the configuration information that is of the first TPQ and that is recorded in the first TPC.

If a TPQ associated with a TP connection has no buffered task descriptor and a quantity of TPQs currently in the idle state is small, the TPQ that is associated with the TP connection but has no buffered task descriptor is released, so that a TP connection that needs to use the TPQ can find in time the TPQ in an idle state that can be associated. If there is no buffered task descriptor in a TPQ associated with a TP connection and a quantity of TPQs currently in the idle state is large, an association between the TP connection and the TPQ is maintained, so that when the TP connection needs to use the TPQ to buffer a task descriptor again, there is no need to search for an available TPQ for association. This reduces a task execution delay.

In a possible implementation, after the first compute device buffers the one or more task descriptors into the first TPQ, the method further includes: The first compute device determines that there is no task descriptor in the first TPQ and no new task descriptor is buffered in the first TPQ within a first duration, and deletes the configuration information that is of the first TPQ and that is recorded in the first TPC.

According to a third aspect, this application provides a data processing method, applied to a network including a plurality of compute devices. One or more transport TP connections are established between any two of the plurality of compute devices, and the TP connection is used for communication between the two compute devices. The method includes: A first compute device receives, via a second TP connection, a first packet sent by a third compute device, where the first packet includes to-be-written data, and the second TP connection is one of TP connections established between the first compute device and the third compute device; the first compute device determines whether the second TP connection is associated with a TPQ; if the second TP connection is not associated with any TPQ, the first compute device establishes an association between the second TP connection and a third TPQ, and then buffers first completion information into the third TPQ, where the third TPQ is one of one or more TPQs that have been created by the first compute device, or the third TPQ is created after the first compute device determines that the second TP connection is not associated with any TPQ; and the first compute device writes the to-be-written data into storage space, and generates the first completion information corresponding to the first packet, where the first completion information indicates that the to-be-written data has been written into the storage space.

According to the foregoing method, when receiving a packet, the compute device configures a TPQ for a TP connection only when the TPQ is required to buffer completion information, and associates the TPQ with the TP connection. That is, each TP connection is not fixedly associated with a TPQ. In addition, each time it is determined whether one TP connection is associated with a TPQ used to buffer completion information, it indicates that after each TP connection is associated with a TPQ, the first compute device also disassociates the TP connection from the TPQ. This can prevent a TP connection from occupying TPQ resources when no task is executed, avoid a problem that the TPQ occupies excessive storage resources, and improve storage resource utilization.

In a possible implementation, the first compute device establishes N TP connections to another compute device, and creates K TPQs used to buffer completion information, where K is less than N, and the third TPQ belongs to the K TPQs. That the first compute device establishes the association between the second TP connection and the third TPQ includes: The first compute device selects the third TPQ from TPQs in an idle state, and then writes configuration information of the third TPQ into a second TPC corresponding to the second TP connection. The TPQ in the idle state is a TPQ that is not associated with a TP connection. Each TP connection corresponds to a TPC, the TPC is used to record configuration information of a TPQ associated with the corresponding TP connection, and the configuration information includes a start address and a storage capacity of the TPQ.

In a possible implementation, establishing the association between the second TP connection and the third TPQ includes: The first compute device creates the third TPQ, and writes configuration information of the third TPQ into a first TPC corresponding to a first TP connection.

According to a fourth aspect, this application provides a data processing apparatus, used in a first compute device and including:
a processing module, configured to determine whether a first TP connection is associated with a transport queue TPQ, where the first TP connection is one of TP connections established between the first compute device and a second compute device, where the processing module determines that the first TP connection is not associated with any TPQ, and sends a first application request to a queue management module, where the first application request is used to apply to the queue management module for a TPQ, and the TP connection is used for communication between the two compute devices; and
the queue management module, configured to return an identifier of a first TPQ to the processing module after receiving the first application request, where the first TPQ is one of one or more TPQs that have been created by the queue management module or the first TPQ is a TPQ created by the queue management module based on a required capacity, the required capacity is a capacity required by the first compute device to buffer one or more task descriptors, each task descriptor includes address information of to-be-transmitted data, and the to-be-transmitted data is data to be transmitted by the first compute device to the second compute device, where
the processing module is further configured to: establish an association between the first TP connection and the first TPQ, and buffer the one or more task descriptors into the first TPQ.

In a possible implementation, the processing module is further configured to: determine that the first TP connection is associated with a second TPQ, and obtain a storage capacity of the second TPQ; and determine that the storage capacity of the second TPQ is less than the required capacity, and send a second application request to the queue management module, where the second application request is used to apply to the queue management module for a TPQ. The queue management module is configured to return the identifier of the first TPQ to the processing module, where a storage capacity of the first TPQ is greater than or equal to the required capacity, and a TPQ in an idle state is a TPQ that is not associated with a TP connection, where
the processing module is further configured to: establish the association between the first TP connection and the first TPQ, and buffer the one or more task descriptors into the first TPQ.

In a possible implementation, the processing module is further configured to delete configuration information that is of the second TPQ and that is recorded in a first transport context TPC corresponding to the first TP connection, where each TP connection is associated with a TPC, the TPC is used to record configuration information of a TPQ associated with the corresponding TP connection, and the configuration information includes a start address and a storage capacity of the TPQ.

In a possible implementation, the first compute device establishes N TP connections to another compute device, and creates M TPQs, where M is less than N, and the first TPQ and the second TPQ are among the M TPQs. The queue management module is specifically configured to:
after receiving the first application request or the second application request, obtain TPQs in an idle state, determine the first TPQ based on the required capacity and a storage capacity of each TPQ in the idle state, and return the identifier of the first TPQ to the processing module, where the storage capacity of the first TPQ is greater than or equal to the required capacity, and the TPQ in the idle state is a TPQ that is not associated with a TP connection. The processing module is specifically configured to write configuration information of the first TPQ into the first TPC corresponding to the first TP connection, where each TP connection corresponds to a TPC, the TPC is used to record the configuration information of the TPQ associated with the corresponding TP connection, and the configuration information includes the start address and the storage capacity of the TPQ.

In a possible implementation, the queue management module is specifically configured to: after receiving the first application request or the second application request, create the first TPQ based on the required capacity of the one or more task descriptors, and return the identifier of the first TPQ to the processing module, where the storage capacity of the first TPQ is greater than or equal to the required capacity. The processing module is specifically configured to write configuration information of the first TPQ into the first TPC corresponding to the first TP connection, where each TP connection corresponds to a TPC, the TPC is used to record the configuration information of the TPQ associated with the corresponding TP connection, and the configuration information includes the start address and the storage capacity of the TPQ.

In a possible implementation, after buffering the one or more task descriptors into the first TPQ, the processing module is further configured to: release the first TPQ after the first compute device determines that there is no task descriptor in the first TPQ, to be specific, delete the configuration information that is of the first TPQ and that is recorded in the first TPC, and remove the association between the first TP connection and the first TPQ.

In a possible implementation, after buffering the one or more task descriptors into the first TPQ, the processing module is further configured to determine that there is no task descriptor in the first TPQ and a first quantity of TPQs currently in an idle state is less than a first threshold, and delete the configuration information that is of the first TPQ and that is recorded in the first TPC.

In a possible implementation, after buffering the one or more task descriptors into the first TPQ, the processing module is further configured to determine, for the first compute device, that there is no task descriptor in the first TPQ and no new task descriptor is buffered in the first TPQ within a first duration, and delete the configuration information that is of the first TPQ and that is recorded in the first TPC.

According to a fifth aspect, this application provides a data processing apparatus, used in a first compute device and including:
a processing module, configured to: determine whether a first TP connection is associated with a transport queue TPQ, and obtain a storage capacity of a second TPQ when determining that the first TP connection is associated with the second TPQ; and send a second application request to a queue management module when determining that the storage capacity of the second TPQ is less than a required capacity, where the first TP connection is one of TP connections established between the first compute device and a second compute device, the second application request is used to apply to the queue management module for a TPQ, and the TP connection is used for communication between the two compute devices; and
the queue management module, configured to return an identifier of a first TPQ to the processing module after receiving the second application request, where a storage capacity of the first TPQ is greater than or equal to the required capacity, the required capacity is a capacity required by the first compute device to buffer one or more task descriptors, each task descriptor includes address information of to-be-transmitted data, and the to-be-transmitted data is data to be transmitted by the first compute device to the second compute device, where
the processing module is further configured to: establish an association between the first TP connection and the first TPQ, and buffer the one or more task descriptors into the first TPQ.

In a possible implementation, the processing module is further configured to delete configuration information that is of the second TPQ and that is recorded in a first TPC corresponding to the first TP connection, where each TP connection is associated with a TPC, the TPC is used to record configuration information of a TPQ associated with the corresponding TP connection, and the configuration information includes a start address and a storage capacity of the TPQ.

In a possible implementation, the first compute device establishes N TP connections to another compute device, and creates M TPQs, where M is less than N, and the first TPQ and the second TPQ are among the M TPQs. The queue management module is specifically configured to: after receiving the second application request, obtain TPQs in an idle state, determine the first TPQ based on the required capacity and a storage capacity of each TPQ in the idle state, and return the identifier of the first TPQ to the processing module, where the storage capacity of the first TPQ is greater than or equal to the required capacity, and the TPQ in the idle state is a TPQ that is not associated with a TP connection. The processing module is specifically configured to write configuration information of the first TPQ into the first TPC corresponding to the first TP connection, where each TP connection corresponds to a TPC, the TPC is used to record the configuration information of the TPQ associated with the corresponding TP connection, and the configuration information includes the start address and the storage capacity of the TPQ.

In a possible implementation, the queue management module is specifically configured to: after receiving the second application request, create the first TPQ based on the required capacity of the one or more task descriptors, and return the identifier of the first TPQ to the processing module, where the storage capacity of the first TPQ is greater than or equal to the required capacity. The processing module is specifically configured to write configuration information of the first TPQ into the first TPC corresponding to the first TP connection, where each TP connection corresponds to a TPC, the TPC is used to record the configuration information of the TPQ associated with the corresponding TP connection, and the configuration information includes the start address and the storage capacity of the TPQ.

According to a sixth aspect, this application provides a data processing apparatus, used in a first compute device and including:
a receiving module, configured to receive, via a second TP connection, a first packet sent by a third compute device, where the first packet includes to-be-written data, and the second TP connection is one of TP connections established between the first compute device and the third compute device;
a processing module, configured to: determine whether the second TP connection is associated with a TPQ; and send a third application request to a queue management module upon determining that the second TPQ connection is not associated with the TPQ, where the third application request is used to apply to the queue management module for a TPQ; and
the queue management module, configured to return an identifier of a third TPQ to the processing module after receiving the third application request, where the third TPQ is one of one or more TPQs that have been created by the first compute device, or the third TPQ is created after the first compute device determines that the second TP connection is not associated with any TPQ, where
the processing module is further configured to: establish an association between the second TP connection and the third TPQ, write the to-be-written data in the first packet into storage space, generate first completion information corresponding to the first packet, and buffer the first completion information into the third TPQ, where the first completion information indicates that the to-be-written data has been written into the storage space.

In a possible implementation, the first compute device establishes N TP connections to another compute device, and creates K TPQs used to buffer completion information, where K is less than N, and the third TPQ belongs to the K TPQs. The queue management module is specifically configured to: after receiving the third application request, select the third TPQ from TPQs in an idle state, and return the identifier of the third TPQ to the processing module, where the TPQ in the idle state is a TPQ that is not associated with a TP connection. The processing module is specifically configured to write configuration information of the third TPQ into a second TPC corresponding to the second TP connection, where each TP connection corresponds to a TPC, the TPC is used to record configuration information of a TPQ associated with the corresponding TP connection, and the configuration information includes a start address and a storage capacity of the TPQ.

In a possible implementation, the queue management module is specifically configured to: create the third TPQ, and return the identifier of the third TPQ to the processing module. The processing module is specifically configured to write configuration information of the third TPQ into a first TPC corresponding to a first TP connection, where each TP connection corresponds to a TPC, the TPC is used to record configuration information of a TPQ associated with the corresponding TP connection, and the configuration information includes a start address and a storage capacity.

According to a seventh aspect, this application provides a chip. The chip includes a processing unit and a storage unit. The storage unit is configured to store program instructions, and the processing unit is configured to run the program instructions, to implement the method according to any one of the first aspect or the possible implementations of the first aspect, and/or implement the method according to any one of the second aspect or the possible implementations of the second aspect, and/or implement the method according to any one of the third aspect or the possible implementations of the third aspect.

According to an eighth aspect, this application provides a compute device, including a processor, a memory, and a chip. The memory is configured to store instructions, and the processor is configured to execute the instructions to implement a service function of the compute device. The chip is configured to implement the method according to any one of the first aspect or the possible implementations of the first aspect, and/or implement the method according to any one of the second aspect or the possible implementations of the second aspect, and/or implement the method according to any one of the third aspect or the possible implementations of the third aspect.

According to a ninth aspect, this application provides a computer-readable storage medium, including computer program instructions. When the computer program instructions are executed by a compute device, the compute device is caused to implement the method according to any one of the first aspect or the possible implementations of the first aspect, and/or implement the method according to any one of the second aspect or the possible implementations of the second aspect, and/or implement the method according to any one of the third aspect or the possible implementations of the third aspect.

According to a tenth aspect, this application provides a computer program product. The computer program product includes a computer program, and when the computer program is run by a compute device, the method according to any one of the first aspect or the possible implementations of the first aspect is implemented, and/or the method according to any one of the second aspect or the possible implementations of the second aspect is implemented, and/or the method according to any one of the third aspect or the possible implementations of the third aspect is implemented.

### BRIEF DESCRIPTION OF DRAWINGS

FIG. 1 is a diagram of a network architecture according to this application;
FIG. 2 is a schematic flowchart of a data processing method according to this application;
FIG. 3 is a schematic flowchart of another data processing method according to this application;
FIG. 4 is a diagram of a data processing apparatus according to this application;
FIG. 5 is a diagram of a chip according to this application; and
FIG. 6 is a diagram of a compute device according to this application.

### DESCRIPTION OF EMBODIMENTS

The following describes a data processing method provided in this application with reference to accompanying drawings.

A unified bus (unified bus, UB) is a network protocol standard based on a remote direct memory access (remote direct memory access, RDMA) technology. In a network based on a UB technology, a transport (transport, TP) connection needs to be established for communication between different compute devices. To implement multi-path transmission between two compute devices, a plurality of TP connections can be further established between the two compute devices, and the plurality of TP connections established between the two compute devices are referred to as a TP group (TP group, TPG).

A UB protocol defines a transaction layer and a transport layer. Two compute devices that communicate with each other are not connected at the transaction layer. When the two compute devices need to communicate with each other, a transport TP connection is established between the two compute devices at the transport layer. If a process A of a first compute device needs to communicate with a process B of a second compute device, for example, the process A sends data to the process B, the process A sends a data transmission command to the transaction layer, the transaction layer converts the data transmission command into a task of the transport layer and then delivers one or more task descriptors to the transport layer, and the transport layer completes, based on the one or more task descriptors, the task of sending the data to the process B of the second compute device.

A task descriptor indicates a communication task between two compute devices. When one compute device needs to send data to the other compute device, or one compute device needs to read data from the other compute device, the task descriptor includes address information of the to-be-transmitted data between the two compute devices, a length of the to-be-transmitted data, and the like. For example, if the first compute device sends data to the second compute device, and the first compute device writes the to-be-transmitted data to a memory of the second compute device by using a write (write) operation, the task descriptor includes a source address of the to-be-transmitted data, a length of the to-be-transmitted data, and a destination address, where the source address indicates a storage location of the to-be-transmitted data in the first compute device, and the destination address indicates a location into which the to-be-transmitted data is written when the to-be-transmitted data is written into the memory of the second compute device. If the first compute device sends the to-be-transmitted data to the second compute device by using a send (send) operation, the task descriptor includes a source address of the to-be-transmitted data and a length of the to-be-transmitted data.

For another example, if the first compute device reads to-be-transmitted data from the second compute device, in other words, the first compute device obtains the to-be-transmitted data from the second compute device by using a read (read) operation, the task descriptor includes a source address of the to-be-transmitted data, a length of the to-be-transmitted data, and a destination address, where the source address indicates a storage location of the to-be-transmitted data in the second compute device, and the destination address indicates a location at which the first compute device writes the to-be-transmitted data into a memory after obtaining the to-be-transmitted data.

A transport queue (TP queue, TPQ) is used to buffer the task descriptor. A TPQ is a segment of storage space, and each TPQ has a corresponding TPQ identifier, a start address, and a storage capacity. A TPQ identifier uniquely indicates a TPQ, and the TPQ identifier may be a number. For example, a compute device creates M TPQs, numbered 1 to M respectively. A start address indicates a start address of a TPQ in a memory, and a storage capacity indicates a storage space size of the TPQ. In this application, storage capacities of the TPQs may be the same, may be partially the same and partially different, or may be completely different. This is not specifically limited in this application.

It should be noted that the storage capacity of the TPQ may be represented by a depth, and the depth indicates a quantity of task descriptors that can be stored in the TPQ. Sizes of all task descriptors are consistent, and depths of a plurality of TPQs created by one compute device may be the same, or may be partially the same and partially different, or may be completely different. This is not specifically limited in this application. In this application, a storage capacity of a TPQ is described by using a depth.

Each TP connection corresponds to a TP context (TP context, TPC). A TPC is a segment of storage space, and is used to record a status of the corresponding TP connection, for example, whether the current TP connection works normally. If a TP connection is associated with a TPQ, a TPC further records configuration information of the TPQ associated with the TP connection, for example, a start address and a storage capacity of the TPQ. If each TPQ corresponds to a TPQ identifier, the configuration information of the TPQ further includes a TPQ identifier.

In the network based on the unified bus (unified bus, UB) protocol, one or more TP connections need to be established between two compute devices that communicate with each other. One compute device can communicate with a plurality of compute devices. Therefore, the one compute device can establish TP connections to the plurality of compute devices, and a corresponding TPQ needs to be created for each TP connection. If a large quantity of TP connections are established between one compute device and another compute device, a TPQ in the compute device occupies a large quantity of storage resources of the compute device. In addition, as compute devices in the network increase, a quantity of TP connections also increases, and storage resources occupied by the TPQ increase accordingly.

For example, the network includes 10,000 compute devices, one TPG is correspondingly established between any two compute devices, each TPG includes eight TP connections, a size of one task descriptor is 64 bytes (bytes, B), and a TPQ is set to be capable of storing 256 task descriptors. In this case, storage space occupied by a TPQ created in one compute device is: 64 B×256×10000×8=1.22 gigabytes (gigabytes, GB).

To resolve the foregoing problem, this application provides a queue sharing method. A shared TPQ resource pool is constructed, and each TPQ in the shared resource pool is not fixedly associated with a TP connection. When a compute device needs to communicate with another compute device via one TP connection to complete a task, the compute device applies for one or more TPQs for the TP connection, in other words, associates the one or more TPQs with the TP connection. After the task is completed, the compute device can release the one or more TPQs to the shared pool, so that another TP connection can use the one or more TPQs. After a communication task indicated by a task descriptor in a TPQ associated with a TP connection is executed, the TPQ associated with the TP connection is released. This can prevent the TP connection from occupying TPQ resources when no task is executed, avoid a problem that the TPQ occupies excessive storage resources, and improve storage resource utilization.

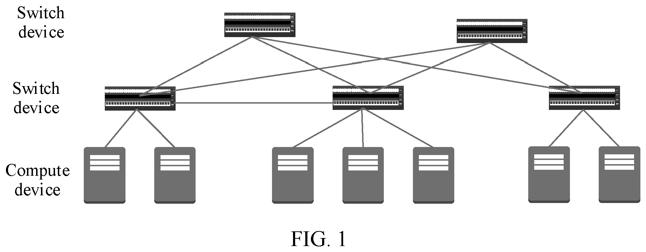

FIG. 1 is a diagram of a network architecture according to this application. The data processing method provided in this application can be applied to the network architecture shown in FIG. 1. FIG. 1 includes a plurality of compute devices and a plurality of switch devices, and a network topology between the plurality of compute devices and the switch devices is a fat-tree (fat-tree) structure. The compute device may be a host, a server, a blade in a blade server, or the like. When the compute device is a server, the switch device may be a switch. When the compute device is a blade in a blade server, the switch device may be an interconnect module in the blade server. This is not specifically limited in this application.

It should be noted that the foregoing network topology architecture is merely an example. The method provided in this application can be further applied to network architectures of other topology structures, including but not limited to a conventional three-layer network topology structure, a leaf-spine (spine-leaf) topology structure, a butterfly (butterfly) topology structure, a star topology structure, a ring topology structure, and the like. This is not specifically limited in this application.

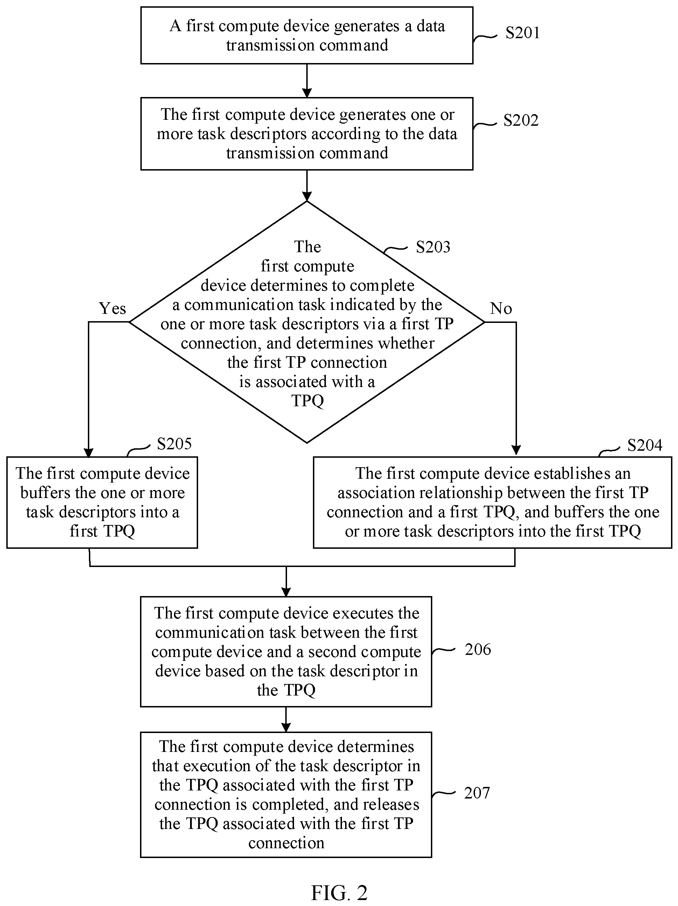

The following describes the data processing method according to this application. FIG. 2 is a schematic flowchart of a data processing method according to this application. The data processing method includes S201 to S207.

S201: A first compute device generates a data transmission command.

In this application, the first compute device may be any compute device in a network, N TP connections are established between the first compute device and another compute device in the network, one or more TP connections are established between the first compute device and a second compute device, and the first compute device and the second compute device exchange data via the one or more established TP connections. The first compute device generates a data transmission command when the first compute device needs to exchange data with the second compute device.

N is a positive integer greater than or equal to 2. The data transmission command includes address information of first data. The first data is data that needs to be transmitted between the first compute device and the second compute device according to the data transmission command. The first data may be data that is required by the second compute device and that is stored in the first compute device, or may be data that is required by the first compute device and that is stored in the second compute device. The address information of the first data includes an address and a length. If the first data is stored in continuous storage space, the address information of the first data includes one address and one length. If the first data is not stored in continuous storage space, the address information of the first data includes a plurality of addresses and a plurality of lengths, and one address corresponds to one length. In this application, one address and a length corresponding to the address are referred to as an address-length pair, and the address-length pair indicates a segment of data, stored in continuous addresses, in the first data.

In this application, the data transmission command includes the following three forms:
(1) The data transmission command is a send (send) command.
   If the data transmission command is a send (send) command, the data transmission command instructs the first compute device to send data to the second compute device. The first data is stored in the first compute device, the address in the address information includes a source address, and the source address indicates a storage location of the first data in the first compute device.
(2) The data transmission command is a write (write) operation command.
   If the data transmission command is a write (write) operation command, the data transmission command instructs the first compute device to write data into the second compute device. The first data is stored in the first compute device, the address in the address information includes a source address and a destination address, the source address indicates a storage location of the first data in the first compute device, and the destination address indicates a location into which the first data is written when the first data is written into a memory of the second compute device.
(3) The data transmission command is a read (read) operation command.

If the data transmission command is a read (read) operation command, the data transmission command instructs the first compute device to read data from the second compute device into the first compute device. The first data is stored in the second compute device, the address in the address information includes a source address and a destination address, the source address indicates a storage location of the first data in the second compute device, and the destination address indicates a location into which the first compute device writes the first data after obtaining the first data.

In a possible implementation, one or more processes run on each of the first compute device and the second compute device, and the processes of the first compute device and the second compute device exchange data via the one or more TP connections between the first compute device and the second compute device. The data transmission command is generated when a first process in the first compute device needs to exchange data with a second process in the second compute device. After generating the data transmission command, the first process delivers the data transmission command to a transaction layer.

S202: The first compute device generates one or more task descriptors according to the data transmission command.

The data transmission command includes the address information of the first data, and the address information may include a plurality of address-length pairs. Because a size (size) of one task descriptor is limited, quantities of addresses and lengths that can be carried by the task descriptor are limited. The first compute device divides the data transmission command into the one or more task descriptors based on the size of the one task descriptor and a size of each address-length pair. For example, a size of the plurality of address-length pairs included in the data transmission command is 1 megabyte (megabyte, MB), but the size of the one task descriptor is 4 kilobyte (kilobyte, KB). In this case, the first compute device generates 256 task descriptors according to the data transmission command.

Each task descriptor includes at least one address-length pair in the data transmission command, and data indicated by an address-length pair in the task descriptor is referred to as to-be-transmitted data. For ease of description, an example in which one task descriptor includes one address-length pair is used. In other words, one task descriptor includes an address and a length of the to-be-transmitted data.

If the data transmission command is a write (write) operation command, the address of the to-be-transmitted data includes a source address and a destination address, where the source address indicates a storage location of the to-be-transmitted data in the first compute device, and the destination address indicates a location into which the to-be-transmitted data is written when the to-be-transmitted data is written into the second compute device. If the data transmission command is a send (send) command, the address of the to-be-transmitted data includes a source address, where the source address indicates a storage location of the to-be-transmitted data in the first compute device. If the data transmission command is a read (read) operation command, the address of the to-be-transmitted data includes a source address and a destination address, where the source address indicates a storage location of the to-be-transmitted data in the second compute device, and the destination address indicates a location into which the first compute device writes the to-be-transmitted data after obtaining the to-be-transmitted data.

In a possible implementation, a plurality of processes run on the first compute device. To ensure that the plurality of processes in the first compute device can exchange data with a process in another compute device in time, for a first process in the first compute device, if an amount of data that needs to be transmitted by the first process is large, a slicing operation is performed on the data that needs to be transmitted by the first process, and the data that needs to be transmitted by the first process is divided into a plurality of slices, where a data amount of each slice is less than a data amount threshold. In addition, after the first process completes transmission of a data amount of one slice, data transmission of the first process is suspended until another process that currently needs to transmit data also completes transmission of a data amount of one slice, and then data transmission corresponding to the first process is performed.

For example, only two TP connections are established between the first compute device and the second compute device, but data needs to be transmitted between five pairs of processes between the first compute device and the second compute device, and a data amount of the first data that needs to be transmitted between the first process in the first compute device and the second process in the second compute device is greater than the data amount threshold. In this case, the first data is divided into a plurality of slices. After completing transmission of data corresponding to one slice via one TP connection, the first process temporarily does not use the TP connection for data transmission, and the first compute device uses the TP connection to transmit data that needs to be transmitted by another process.

In this application, after generating the data transmission command, the first process delivers the data transmission command to the transaction layer, and the transaction layer performs the slicing operation and generates the one or more task descriptors according to the data transmission command.

S203: The first compute device determines to complete, via a first TP connection, a communication task indicated by the one or more task descriptors, and determines whether the first TP connection is associated with a TPQ; and if the first TP connection is not associated with any TPQ, performs S204; or if the first TP connection is associated with a first TPQ, performs S205.

After obtaining the one or more task descriptors, the first compute device needs to buffer the one or more task descriptors into one or more TPQs, so that a device like a network interface card obtains the task descriptor from the TPQ, and executes the corresponding communication task based on the task descriptor. In this application, each task descriptor further includes an IP address of a target compute device (namely, the second compute device) and a process number of a target process (namely, the second process). The first compute device first determines, based on the IP address in the task descriptor, that the task descriptor indicates the communication task between the first compute device and the second compute device; and the first compute device determines the one or more TP connections established between the first compute device and the second compute device, and then selects one TP connection from the one or more TP connections established between the first compute device and the second compute device, to implement a communication task between the first process and the second process. This application is described by using an example in which the first TP connection is used to implement the communication task between the first process and the second process.

In this application, after the first compute device determines to implement the communication task between the first process and the second process via the first TP connection, the first compute device obtains a first TPC corresponding to the first TP connection. If the first TPC records configuration information of the TPQ, it indicates that the first TP connection has been associated with the TPQ; or if the first TPC does not record configuration information of the TPQ, it indicates that the first TP connection is not associated with any TPQ.

S204: The first compute device establishes an association between the first TP connection and the first TPQ, and buffers the one or more task descriptors into the first TPQ.

In this application, if the first TP connection is not associated with any TPQ, the first compute device can buffer the one or more task descriptors into the TPQ in two manners. The following separately describes the foregoing two manners.
(1) The first compute device creates M TPQs when the first compute device establishes the N TP connections to another compute device.

The first compute device creates the M TPQs when the first compute device establishes the N TP connections to another compute device. M is less than N, and each TPQ corresponds to a TPQ identifier, a start address, and a depth. Depths of the M TPQs may be the same, or may be partially the same and partially different, or may be completely different. This is not specifically limited in this application.

If the first TP connection is not associated with any TPQ, the first compute device first obtains TPQs currently in an idle state and a required capacity, where the TPQ in the idle state is a TPQ that is not associated with a TP connection, and the required capacity is a size of storage space required for buffering the one or more task descriptors; then determines, based on a storage capacity of each TPQ in the idle state and the required capacity, a TPQ whose storage capacity is greater than or equal to the required capacity, for example, the first TPQ; then writes configuration information of the first TPQ into the first TPC; and finally buffers the one or more task descriptors into the first TPQ.

Optionally, each TP connection can be associated with one or more TPQs. If the first TP connection is not associated with any TPQ, the first compute device selects one or more TPQs in an idle state from the TPQs in the idle state, where storage capacities of the one or more TPQs in the idle state are greater than or equal to the required capacity; then writes configuration information of the one or more TPQs in the idle state into the first TPC; and then buffers the one or more task descriptors into the one or more TPQs in the idle state.

(2) The first compute device does not create the TPQ when the first compute device establishes the N TP connections to another compute device.

The first compute device does not create the TPQ when the first compute device establishes the N TP connections to another compute device, but creates a shared TPQ pool in a memory. When the first TP connection needs to use a TPQ to buffer a task descriptor, the first compute device first creates a new TPQ in the shared TPQ pool based on the required capacity of the one or more task descriptors, for example, creates a first TPQ, where a storage capacity of the first TPQ is greater than or equal to the required capacity, and configures a TPQ identifier for the first TPQ; then writes configuration information of the first TPQ into the first TPC; and then buffers the one or more task descriptors into the newly created first TPQ.

S205: The first compute device buffers the one or more task descriptors into the first TPQ.

In this application, if the first TP connection is associated with the TPQ, a process in which the first compute device buffers the one or more task descriptors into the TPQ includes the following two cases:
(1) The first TP connection has been associated with the first TPQ, and the storage capacity of the first TPQ is greater than or equal to the required capacity.
   If the first TP connection has been associated with the first TPQ, and the storage capacity of the first TPQ is greater than or equal to the required capacity, in other words, a depth of the first TPQ is greater than or equal to a quantity of the one or more task descriptors, the first compute device buffers the one or more task descriptors into the first TPQ based on a start address, recorded in the first TPC, of the first TPQ. The first TPQ belongs to the M TPQs.
   Optionally, each TP connection can be associated with the one or more TPQs. If the first TP connection has been associated with the one or more TPQs, and a sum of depths of the one or more TPQs is greater than or equal to the quantity of the one or more task descriptors, the one or more task descriptors are buffered into the TPQ associated with the first TP connection. The one or more TPQs associated with the first TP connection are among the M TPQs.
(2) The storage capacity of the TPQ associated with the first TP connection is less than the required capacity.

If the first TP connection has been associated with the TPQ, for example, the first TP connection is currently associated with a second TPQ, but a storage capacity of the second TPQ is less than the required capacity, in other words, a depth of the second TPQ is less than a quantity of the one or more task descriptors, the first compute device can release the second TPQ, to be specific, remove an association between the first TP connection and the second TPQ, and delete configuration information that is of the second TPQ and that is recorded in the first TPC, where the configuration information of the second TPQ includes a TPQ identifier, a start address, and a depth.

If the first compute device creates the M TPQs when the first compute device establishes the N TP connections to another compute device, the first compute device obtains TPQs currently in the idle state and the required capacity; then determines, based on a storage capacity of each TPQ in the idle state and the required capacity, a TPQ whose storage capacity is greater than or equal to the required capacity, for example, the first TPQ; then writes the configuration information of the first TPQ into the first TPC; and finally buffers the one or more task descriptors into the first TPQ.

Optionally, each TP connection can be associated with one or more TPQs. If the first TP connection has been associated with the TPQ, but a sum of depths of the TPQs associated with the first TP connection is less than the quantity of the one or more task descriptors, the first compute device can select one or more TPQs in an idle state from the TPQs in the idle state, so that the sum of the depths of the TPQs associated with the first TP connection is greater than or equal to the quantity of the one or more task descriptors; then write configuration information of the one or more TPQs in the idle state into the first TPC; and then buffer the one or more task descriptors into the one or more TPQs associated with the first TP connection.

If the first compute device does not create the TPQ when establishing the N TP connections to another compute device, but creates the shared TPQ pool in the memory, the first compute device first creates a new TPQ in the shared TPQ pool based on the required capacity of the one or more task descriptors, for example, creates a first TPQ, where a storage capacity of the first TPQ is greater than or equal to the required capacity, and configures a TPQ identifier for the first TPQ; then writes configuration information of the first TPQ into the first TPC; and then buffers the one or more task descriptors into the newly created first TPQ.

It should be noted that the TPQ created by the first compute device includes a transmit TPQ (transmit TPQ, TX TPQ) and a receive TPQ (receive TPQ, RX TPQ). The M TPQs are TX TPQs, the TX TPQ is used to buffer the task descriptor, and the RX TPQ is used to buffer completion information. Related content of the completion information is described below.

In this application, after performing the slicing operation and generating the one or more task descriptors according to the data transmission command, the transaction layer sends the generated one or more task descriptors to a transport layer, and the transport layer completes the operations described in S203 to S205. It should be understood that both the transaction layer and the transport layer have corresponding hardware units, configured to implement functions of the transaction layer and the transport layer.

S206: The first compute device executes the communication task between the first compute device and the second compute device based on the task descriptor in the TPQ.

After the first compute device buffers the one or more task descriptors into the TPQ, for example, buffers the one or more task descriptors into the first TPQ, the first compute device executes, based on the one or more task descriptors buffered in the first TPQ, the communication task corresponding to the task descriptors, to complete data exchange between the first process and the second process.

Because the data transmission command includes three forms, the following three cases are included when the data exchange between the first process and the second process is performed:
(1) The data transmission command is a send (send) command.
   If the data transmission command is a send (send) command, each task descriptor includes the source address of the to-be-transmitted data, the length of the to-be-transmitted data, an address of the second compute device, the process number of the second process, and the like. The network interface card of the first compute device reads a source address of one piece of to-be-transmitted data and a length of the to-be-transmitted data from the first TPQ, obtains one piece of to-be-transmitted data from the memory of the first compute device based on the read source address of the to-be-transmitted data and the read length of the to-be-transmitted data, generates one or more packets based on information such as the to-be-transmitted data, the address of the second compute device, and the process number of the second process, and then sends the packet carrying the to-be-transmitted data to the second compute device. The network interface card of the first compute device reads a source address of one piece of to-be-transmitted data and a length of the to-be-transmitted data from the first TPQ each time, and then generates one or more packets according to the foregoing method and sends the one or more packets to the second compute device until the communication task corresponding to the one or more task descriptors is executed.
   It should be understood that if the length of the to-be-transmitted data is greater than a maximum transmission unit (maximum transmission unit, MTU), the to-be-transmitted data is sent to the second compute device via a plurality of packets.
(2) The data transmission command is a write (write) operation command.
   If the data transmission command is a write (write) operation command, each task descriptor includes the source address of the to-be-transmitted data, the destination address of the to-be-transmitted data, the length of the to-be-transmitted data, an address of the second compute device, the process number of the second process, and the like. The network interface card of the first compute device reads a source address of one piece of to-be-transmitted data, a destination address of the to-be-transmitted data, and a length of the to-be-transmitted data from the first TPQ, obtains one piece of to-be-transmitted data from the memory of the first compute device based on the read source address of the to-be-transmitted data and the read length of the to-be-transmitted data, generates one or more packets based on information such as the to-be-transmitted data, the destination address of the to-be-transmitted data, the address of the second compute device, and the process number of the second process, and then sends the packet carrying the to-be-transmitted data to the second compute device. The network interface card of the first compute device reads source address information of one piece of to-be-transmitted data, destination address information of the to-be-transmitted data, and a length of the to-be-transmitted data from the first TPQ each time, and then generates one or more packets according to the foregoing method and sends the one or more packets to the second compute device until the communication task corresponding to the one or more task descriptors is executed.
(3) The data transmission command is a read (read) operation command.

If the data transmission command is a read (read) operation command, each task descriptor includes the source address of the to-be-transmitted data, the destination address of the to-be-transmitted data, the length of the to-be-transmitted data, an address of the second compute device, and the like. The network interface card of the first compute device reads a task descriptor from the first TPQ, generates a read request based on the source address of the to-be-transmitted data, the length of the to-be-transmitted data, the address of the second compute device, and the like, and then sends the read request to the second compute device. A network interface card of the second compute device obtains the to-be-transmitted data from the memory of the second compute device based on the source address of the to-be-transmitted data and the length of the to-be-transmitted data, encapsulates the to-be-transmitted data into a packet, and sends the packet to the first compute device. After receiving the to-be-transmitted data, the first compute device writes the to-be-transmitted data into the location indicated by the destination address of the to-be-transmitted data.

S207: The first compute device determines that execution of the task descriptor in the TPQ associated with the first TP connection is completed, and releases the TPQ associated with the first TP connection.

After the network interface card of the first compute device reads all the task descriptors from the first TPQ and executes the task descriptors, the first compute device releases the first TPQ, to be specific, removes the association between the first TP connection and the first TPQ, and deletes the configuration information that is of the first TPQ and that is recorded in the first TPC. If the first TP connection is associated with a plurality of TPQs, configuration information of the plurality of TPQs in the first TPC is deleted.

In a possible implementation, if the first compute device creates the M TPQs when creating the N TP connections, the first compute device can obtain, in a first periodicity, a first quantity of TPQs currently in an idle state. If the first quantity is less than a first threshold, the first compute device obtains a TPQ that is currently associated with a TP connection but has no buffered task descriptor, and the first compute device releases the TPQ that is associated with the TP connection but has no buffered task descriptor. For example, the first compute device polls a TPC corresponding to each TP connection. For any TPC, for example, the first TPC, if the first TPC records a TPQ identifier, and the TPQ identifier represents the first TPQ, the first compute device determines whether the first TPQ buffers a task descriptor; and if the first TPQ does not buffer the task descriptor, releases the first TPQ, and deletes configuration information of the first TPQ in the first TPC; or if the first TPQ buffers the task descriptor, does not release the first TPQ. If the first quantity is greater than or equal to the first threshold, even if there is currently a TPQ that is associated with a TP connection but has no buffered task descriptor, the TPQ does not need to be released.

If the first compute device does not create the TPQ when creating the N TP connections, but creates the shared TPQ pool in the memory, only when a TP connection needs to use a TPQ to store a task descriptor, the first compute device creates a new TPQ used to buffer the task descriptor in the shared TPQ pool based on a required capacity of the task descriptor that needs to be buffered. After all communication tasks corresponding to task descriptors in a TPQ associated with a TP connection are executed, the first compute device releases the TPQ associated with the TP connection, and releases space occupied by the TPQ associated with the TP connection to the shared TPQ pool; or when a size of remaining storage space of the shared TPQ pool is less than a capacity threshold, releases the space occupied by the TPQ associated with the TP connection.

In a possible implementation, if no task descriptor is buffered in a TPQ associated with a TP connection and the TPQ does not buffer a new task descriptor within a first duration, the TPQ associated with the TP connection is released, to be specific, configuration information of the TPQ in a TPC corresponding to the TP connection is deleted.

It should be noted that the foregoing describes a communication process between the first process and the second process by using an example in which the first TP connection implements the communication task between the first process and the second process. In this application, the first process and the second process can further complete the communication task via a plurality of TP connections established between the first compute device and the second compute device. If the first process and the second process complete the communication task via the plurality of TP connections established between the first compute device and the second compute device, the first compute device generates a plurality of task descriptors according to the data transmission command, and buffers the plurality of task descriptors into TPQs associated with the plurality of TP connections. For a process of implementing communication between the first process and the second process via each of the plurality of TP connections, refer to the foregoing process of implementing communication between the first process and the second process via the first TP connection. Details are not described herein again.

It should be understood that, if the first TP connection is not associated with any TPQ and there is no available TPQ currently, or if the first TP connection is associated with the TPQ, but a storage capacity of the associated TPQ is less than the required capacity, and there is no available TPQ currently, the first compute device temporarily buffers the one or more task descriptors into storage space corresponding to the transaction layer, waiting for the one or more task descriptors to be delivered to the transport layer again. The available TPQ is a TPQ that is not associated with a TP connection and that has a storage capacity greater than or equal to the required capacity. For example, the transaction layer includes a queue, used to buffer a task descriptor that needs to be delivered to the transport layer. If the one or more task descriptors that have been delivered to the transport layer have no available TPQ, the one or more task descriptors are buffered at the end of the queue, and wait to be resent to the transport layer.

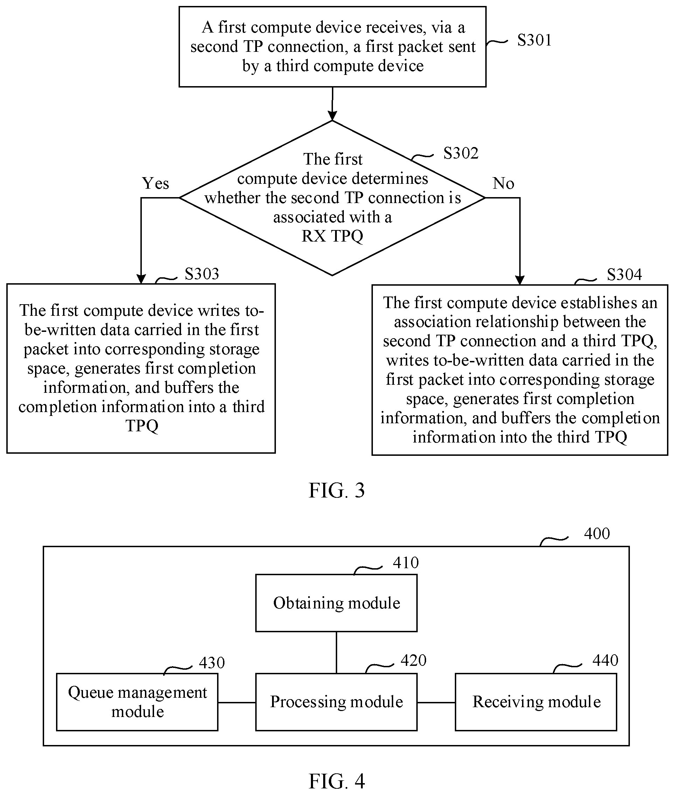

The foregoing describes the data processing method based on the shared TPQ queue pool provided in this application by using an example in which the first compute device sends the packet carrying the to-be-transmitted data to the second compute device or the first compute device sends the read request to the second compute device. In this application, the first compute device can further receive, based on the shared TPQ pool, data sent by another compute device. FIG. 3 is a schematic flowchart of another data processing method according to this application.

S301: A first compute device receives, via a second TP connection, a first packet sent by a third compute device.

One or more TP connections are established between the first compute device and the third compute device. If a third process in the third compute device needs to send data to a first process in the first compute device, the third compute device can send a plurality of packets to the first compute device via the one or more TP connections. The one or more TP connections include the second TP connection. For a method in which the third process in the third compute device sends the data to the first process in the first compute device, refer to the method in which the first process in the first compute device sends the first data to the second process in the second compute device. Details are not described herein again.

Because the one or more TP connections are established between the first compute device and the third compute device, the third compute device can send the plurality of packets to the first compute device via the one or more TP connections. If the third compute device sends the plurality of packets to the first compute device via a plurality of TP connections, the plurality of packets may arrive at the first compute device out of order.

S302: The first compute device determines whether the second TP connection is associated with an RX TPQ; and if the second TP connection is associated with the RX TPQ, performs S303; or if the second TP connection is not associated with any RX TPQ, performs S304.

In this application, if a transport layer needs to perform order-preserving reporting to the first process after receiving a plurality of packets and writing to-be-written data in the plurality of packets into corresponding storage space, after receiving a packet and writing to-be-written data in the packet into corresponding storage space, the transport layer generates completion information corresponding to the packet, and the completion information needs to be buffered into the RX TPQ. Therefore, after the first compute device receives the packet via the second TP connection, it needs to be determined whether the second TP connection is associated with the RX TPQ. The completion information includes a first indication information indicating whether the to-be-written data has been written into the target storage space, and a second indication information indicating whether order-preserving reporting is required.

Order-preserving reporting means that the transport layer reports, to the first process according to a sending sequence of received packets, whether each packet is successfully received. Successful receiving means that data in the packet has been written into corresponding storage space.

For example, the third process in the third compute device sequentially sends a first packet, a second packet, and a third packet to the first process in the first compute device, but the first compute device does not sequentially receive the first packet, the second packet, and the third packet, for example, the transport layer of the first compute device sequentially receives the third packet, the first packet, and the second packet. In this case, after successfully receiving the third packet, the transport layer does not report to the first process that the third packet has been successfully received, but report to the first process that the third packet has been successfully received only after successfully receiving the first packet and reporting to the first process that the first packet has been successfully received, and successfully receiving the second packet and reporting to the first process that the second packet has been successfully received.

The first compute device receives, via the second TP connection, the packet sent by the third compute device, and the first compute device determines, based on information in a second TPC corresponding to the second TP connection, whether the second TP connection is associated with a TPQ; and if the second TPC includes an identifier of the RX TPQ, determines that the second TPQ connection is associated with the RX TPQ; or if the second TPC does not include an identifier of the RX TPQ, determines that the second TPQ is not associated with the RX TPQ.

S303: The first compute device writes the to-be-written data carried in the first packet into corresponding storage space, generates first completion information, and buffers the completion information into a third TPQ.

The first compute device determines that the second TP connection has been associated with the RX TPQ. In this case, the first compute device parses the received first packet to obtain the to-be-written data carried in the first packet, writes the to-be-written data into the corresponding storage space, generates the first completion information corresponding to the first packet, and buffers the first completion information into the third TPQ associated with the second TP connection, where the third TPQ belongs to RX TPQs. The first completion information includes a first indication information indicating whether the to-be-written data in the first packet has been written into the target storage space, and a second indication information indicating whether order-preserving reporting is required.

In this application, the first indication information and the second indication information each may include one bit. For example, when the bit included in the first indication information is 1, it indicates that the data in the packet has been successfully written into the storage space; or when the bit included in the first indication information is 0, it indicates that the data in the packet fails to be written into the storage space. When the bit included in the second indication information is 1, it indicates that order-preserving reporting is required; or when the bit included in the second indication information is 0, it indicates that order-preserving reporting is not required.

S304: The first compute device establishes an association between the second TP connection and the third TPQ, writes the to-be-written data carried in the first packet into the corresponding storage space, generates the first completion information, and buffers the completion information into the third TPQ.

In this application, if the second TP connection is not associated with any RX TPQ, the first compute device can buffer the first completion information into the RX TPQ in two manners. The following separately describes the two manners.
(1) The first compute device creates K RX TPQs when the first compute device establishes N TP connections to another compute device.
   The first compute device creates the K RX TPQs used to buffer completion information when the first compute device establishes the N TP connections to another compute device. After receiving a packet via one TP connection, if the TP connection has no associated RX TPQ, the first compute device first configures an RX TPQ in an idle state for the TP connection, and writes configuration information of the RX TPQ into a TPC corresponding to the TP connection; then parses the packet to obtain to-be-written data carried in the packet, writes the to-be-written data into storage space, and generates completion information corresponding to the packet; and finally buffers the completion information corresponding to the packet into the RX TPQ. The RX TPQ in the idle state is an RX TPQ that has no buffered completion information and that is not associated with a TP connection. If there is no RX TPQ in the idle state, the packet is discarded.
   For example, the first compute device receives, via the second TP connection, the first packet sent by the third compute device. Upon determining that the second TP connection is not associated with any RX TPQ, the first compute device selects the third TPQ in an idle state from TPQs in an idle state, and writes configuration information of the third TPQ into the second TPC corresponding to the second TP connection; and then parses the first packet to obtain the to-be-written data, writes the to-be-written data into the storage space, generates the first completion information corresponding to the first packet, and finally buffers the first completion information into the third TPQ.
(2) The first compute device does not create a TPQ when the first compute device establishes N TP connections to another compute device.

If the first compute device does not create the RX TPQ when creating the N TP connections, but creates a shared TPQ pool in a memory, the first compute device creates a new RX TPQ used to buffer completion information in the shared TPQ pool only when a TP connection needs to use the RX TPQ to buffer the completion information, for example, creates an RX TPQ, and configures a TPQ identifier for the RX TPQ; then writes configuration information of the RX TPQ into a TPC corresponding to the TP connection; then parses the packet to obtain to-be-written data carried in the packet, writes the to-be-written data into storage space, and generates completion information corresponding to the packet; and finally buffers the completion information corresponding to the packet into the RX TPQ.

For example, the first compute device receives the first packet via the second TP connection. Upon determining that the second TP connection is not associated with any RX TPQ, the first compute device creates a third TPQ in the shared TPQ pool, and writes configuration information of the third TPQ into the second TPC corresponding to the second TP connection; and then parses the first packet to obtain the to-be-written data, writes the to-be-written data into the storage space, generates the first completion information corresponding to the first packet, and finally buffers the first completion information into the third TPQ.

In this application, if the first compute device creates the K RX TPQs used to buffer the completion information when establishing the N TP connections, the first compute device can obtain, in a second periodicity, a second quantity of RX TPQs currently in an idle state. If the second quantity is less than a second threshold, the first compute device obtains an RX TPQ that is currently associated with a TP connection but has no buffered completion information, and the first compute device releases the RX TPQ that is associated with the TP connection but has no buffered completion information. If the RX TPQ buffers completion information, the RX TPQ is not released. If the second quantity is greater than or equal to the second threshold, even if the RX TPQ that is associated with the TP connection but has no buffered completion information currently exists, the RX TPQ does not need to be released.

If the first compute device does not create the RX TPQ when creating the N TP connections, but creates a shared TPQ pool in a memory, the first compute device creates a new RX TPQ used to buffer completion information in the shared TPQ pool only when a TP connection needs to use the RX TPQ to buffer the completion information. After completion information in an RX TPQ associated with a TP connection is processed, the first compute device releases the RX TPQ associated with the TP connection, and releases space occupied by the RX TPQ associated with the TP connection to the shared TPQ pool.

In this application, when order-preserving reporting is required, the transport layer queries, in the RX TPQ based on a packet sending sequence, whether there is corresponding completion information. If there is the corresponding completion information, the transport layer reports, to the first process, that the packet has been successfully received. For example, the third process in the third compute device sequentially sends a first packet, a second packet, and a third packet to the first process in the first compute device, but the first compute device does not sequentially receive the first packet, the second packet, and the third packet, for example, the transport layer of the first compute device sequentially receives the third packet, the first packet, and the second packet. In this case, after successfully receiving the third packet and generating third completion information, the transport layer does not report to the first process that the third packet has been successfully received, but buffers the third completion information into the third TPQ. After successfully receiving the first packet and generating the first completion information, the transport layer buffers the first completion information into the third TPQ; and after successfully receiving the second packet and generating second completion information, the transport layer buffers the second completion information into the third TPQ.

When performing order-preserving reporting, the transport layer of the first compute device queries, according to a packet sending sequence, the third TPQ for the first completion information corresponding to the first packet. If the third TPQ does not have the first completion information but has the third completion information, the transport layer does not report, to the first process, that the third packet is successfully received until the first completion information corresponding to the first packet is found. Only then does the transport layer report to the first process that the first packet is successfully received. Then, the third TPQ is queried for the second completion information corresponding to the second packet. If the third TPQ does not have the second completion information but has the third completion information, the transport layer does not report to the first process that the third packet is successfully received until the second completion information corresponding to the second packet is found. Only then does the transport layer report to the first process that the second packet is successfully received. Then, the third TPQ is queried for the third completion information corresponding to the third packet. If the third TPQ has the third completion information, the transport layer reports to the first process that the third packet is successfully received.

For brief description, the foregoing method embodiments are represented as a combination of a series of actions. However, a person skilled in the art should appreciate that the present invention is not limited to the described order of the actions. In addition, a person skilled in the art should also appreciate that all embodiments described in the specification are preferred embodiments, and the related actions are not necessarily mandatory to the present invention. Another appropriate step combination that can be figured out by a person skilled in the art based on the content described above also falls within the protection scope of the present invention.

This application further provides a data processing apparatus. FIG. 4 is a diagram of a data processing apparatus according to this application. The data processing apparatus 400 is configured to implement the method in the method embodiment shown in FIG. 2 or FIG. 3, that is, configured to implement the method implemented by the first compute device. The data processing apparatus 400 includes an obtaining module 410, a processing module 420, and a queue management module 430.

The obtaining module 410 is configured to obtain one or more task descriptors, where each task descriptor includes address information of to-be-transmitted data, and the to-be-transmitted data is data to be transmitted by the first compute device to a second compute device. For related descriptions of the task descriptor, refer to the related descriptions of S201 and S202 in the foregoing method embodiment. Details are not described herein again.

The processing module 420 is configured to: determine whether a first TP connection is associated with a transport queue TPQ, where the first TP connection is one of TP connections established between the first compute device and the second compute device; and determine that the first TP connection is not associated with any TPQ, and send a first application request to the queue management module, where the first application request is used to apply to the queue management module for a TPQ. For a method in which the processing module 420 determines whether the first TP connection is associated with the transport queue TPQ, refer to the related descriptions in S203. Details are not described herein again.

The queue management module 430 is configured to return an identifier of a first TPQ to the processing module after receiving the first application request, where the first TPQ is one of one or more TPQs that have been created by the queue management module, or the first TPQ is a TPQ created by the queue management module based on a required capacity, and the required capacity is a capacity required for buffering the one or more task descriptors. For a method in which the queue management module 430 selects the first TPQ or creates the first TPQ, refer to the related descriptions in S204 and S205. Details are not described herein again.

The processing module 420 is further configured to: establish an association between the first TP connection and the first TPQ, and buffer the one or more task descriptors into the first TPQ.

In a possible implementation, the processing module 420 is further configured to: determine that the first TP connection is associated with a second TPQ, and obtain a storage capacity of the second TPQ; and determine that the storage capacity of the second TPQ is less than the required capacity, and send a second application request to the queue management module 430, where the second application request is used to apply to the queue management module for a TPQ. The queue management module 430 is configured to return the identifier of the first TPQ to the processing module, where a storage capacity of the first TPQ is greater than or equal to the required capacity, and a TPQ in an idle state is a TPQ that is not associated with a TP connection. For a method in which the queue management module 430 selects the first TPQ or creates the first TPQ, refer to the related descriptions in S204 and S205. Details are not described herein again.

In a possible implementation, the first compute device establishes N TP connections to another compute device, and creates M TPQs, where M is less than N, and the first TPQ and the second TPQ are among the M TPQs. After receiving the first application request or the second application request, the queue management module 430 obtains TPQs in an idle state, determines the first TPQ based on the required capacity and a storage capacity of each TPQ in the idle state, and returns the identifier of the first TPQ to the processing module, where the storage capacity of the first TPQ is greater than or equal to the required capacity, and the TPQ in the idle state is a TPQ that is not associated with a TP connection. The processing module 420 writes configuration information of the first TPQ into a first TPC corresponding to the first TP connection, where each TP connection corresponds to a TPC, the TPC is used to record configuration information of a TPQ associated with the corresponding TP connection, and the configuration information includes a start address and a storage capacity of the TPQ.

In a possible implementation, after receiving the first application request or the second application request, the queue management module 430 creates the first TPQ based on the required capacity of the one or more task descriptors, and returns the identifier of the first TPQ to the processing module, where the storage capacity of the first TPQ is greater than or equal to the required capacity. The processing module 420 writes configuration information of the first TPQ into a first TPC corresponding to the first TP connection.

In a possible implementation, after buffering the one or more task descriptors into the first TPQ, the processing module 420 releases the first TPQ after the first compute device determines that there is no task descriptor in the first TPQ, to be specific, deletes the configuration information that is of the first TPQ and that is recorded in the first TPC, and removes the association between the first TP connection and the first TPQ. For a method in which the processing module 420 releases the first TPQ, refer to the related descriptions in S207. Details are not described herein again.

The foregoing describes the data processing apparatus 400 that is configured to implement an operation process performed by the first compute device when sending data. For operations implemented by the modules in a case in which the data processing apparatus 400 sends the data, refer to the related descriptions in the method embodiment shown in FIG. 2. Details are not described herein again.

The data processing apparatus 400 may be further configured to implement an operation of receiving data by the first compute device. When the data processing apparatus 400 is configured to receive the data, the data processing apparatus 400 further includes a receiving module 440. The receiving module 440 is configured to receive, via a second TP connection, a first packet sent by a third compute device, where the first packet includes to-be-written data, and the second TP connection is one of TP connections established between the first compute device and a third compute device.

The processing module 420 is configured to: determine whether the second TP connection is associated with a TPQ; and send a third application request to the queue management module 430 upon determining that the second TPQ connection is not associated with the TPQ, where the third application request is used to apply to the queue management module for an RX TPQ used to buffer completion information.

The queue management module 430 is configured to return an identifier of a third TPQ to the processing module 420 after receiving the third application request, where the third TPQ is one of one or more TPQs that have been created by the first compute device, or the third TPQ is created after the first compute device determines that the second TP connection is not associated with any TPQ. The processing module 420 is further configured to establish an association between the second TP connection and the third TPQ, write the to-be-written data in the first packet into storage space, generate first completion information corresponding to the first packet, and buffer the first completion information into the third TPQ, where the first completion information indicates that the to-be-written data in the first packet has been written into the storage space.

In a possible implementation, the first compute device establishes N TP connections to another compute device, and creates K TPQs used to buffer completion information, where K is less than N; and the third TPQ belongs to the K TPQs. After receiving the third application request, the queue management module 430 selects the third TPQ from TPQs in an idle state, and returns the identifier of the third TPQ to the processing module. The processing module 420 writes configuration information of the third TPQ into a second TPC corresponding to the second TP connection.

In a possible implementation, after receiving the third application request, the queue management module 430 creates the third TPQ, and returns the identifier of the third TPQ to the processing module. The processing module 420 is specifically configured to write configuration information of the third TPQ into a first TPC corresponding to a first TP connection.

For operations implemented by the modules in a case in which the data processing apparatus 400 receives the data, refer to the related descriptions in the method embodiment shown in FIG. 3. Details are not described herein again.

It should be understood that FIG. 4 shows only an example of a division manner of the data processing apparatus 400. In actual application, the data processing apparatus 400 may further have another division manner. This is not specifically limited in this application.

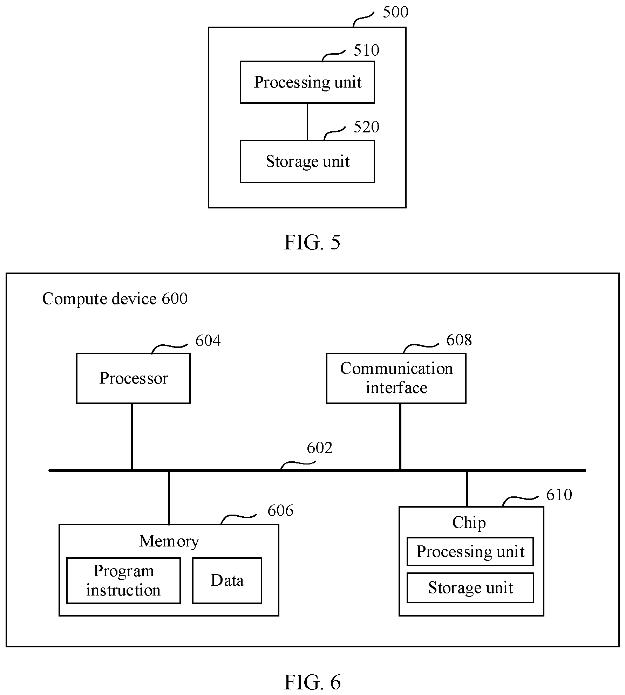

This application further provides a chip. FIG. 5 is a diagram of a chip according to this application. The chip 500 includes a processing unit 510 and a storage unit 520. The storage unit 520 is configured to store program instructions. The processing unit 510 is configured to run the program instructions to implement the method described in the method embodiment corresponding to FIG. 2 or FIG. 3. The processing unit 510 includes the data processing apparatus 400 shown in FIG. 4.

This application further provides a compute device. FIG. 6 is a diagram of a compute device according to this application. The compute device 600 includes a bus 602, a processor 604, a memory 606, a communication interface 608, and a chip 610. The processor 604, the memory 606, and the communication interface 608 communicate with each other through the bus 602. It should be understood that quantities of processors and memories in the compute device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 6. However, it does not mean that there is only one bus or only one type of bus. The bus 602 may include a path for transmitting information between components (for example, the memory 606, the processor 604, the communication interface 608, and the chip 610) of the compute device 600.

The processor 604 may be a central processing unit (Central Processing Unit, CPU), or may include the CPU and another hardware chip. The hardware chip may be of a plurality of types, for example, a coprocessing unit, including any one of chips such as a graphics processing unit (graphics processing unit, GPU), a tensor processing unit (tensor processing unit, TPU), a programmable logic device (programmable logic device, PLD), a complex programmable logic device (complex programmable logic device, CPLD), a field programmable gate array (field programmable gate array, FPGA), or a digital signal processor (digital signal processor, DSP). The compute device 600 may include one or more hardware chips of any one of the foregoing types, or may include a plurality of types of hardware chips. This is not specifically limited in this application.

The memory 606 may include a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 606 stores executable program instructions and data, and the processor 604 executes executable program code to implement a service function of the compute device.

The chip 610 is the chip 500 shown in FIG. 5. The chip 610 includes a processing unit and a storage unit. The storage unit is configured to store program instructions. The processing unit is configured to run the program instructions to implement the method described in the method embodiment corresponding to FIG. 2 or FIG. 3. Details are not described herein again.

The communication interface 608 may be a wired interface or a wireless interface, and is configured to communicate with another module or device. For example, the source tracing request is received, and configuration information entered by a user by using a configuration interface is received. The wired interface may be an ethernet interface, a local interconnect network (local interconnect network, LIN), or the like. The wireless interface may be a cellular network interface, a wireless local area network interface, or the like.

This application further provides a computer program product including instructions. The computer program product may be software or a program product that includes the instructions and that can run on a compute device or can be stored in any usable medium. When the computer program product runs on the compute device, the compute device is caused to implement the data processing method in the embodiment shown in FIG. 2 or FIG. 3.

This application further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium, a semiconductor medium (for example, a solid-state drive), or the like. The computer-readable storage medium includes instructions, and the instruction instructs the compute device to implement the data processing method in the embodiment shown in FIG. 2 or FIG. 3.

Finally, it should be noted that the foregoing embodiments are merely intended for describing technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A data processing method, applied to a network comprising a plurality of compute devices, wherein one or more transport TP connections are established between any two of the plurality of compute devices, the TP connection is used for communication between the two compute devices, and the method comprises:
determining, by a first compute device, whether a first TP connection is associated with a transport queue TPQ, wherein the first TP connection is one of TP connections established between the first compute device and a second compute device, and the first compute device and the second compute device are among the plurality of compute devices;
determining, by the first compute device, that the first TP connection is not associated with any TPQ, and establishing an association between the first TP connection and a first TPQ, wherein the first TPQ is one of one or more TPQs that have been created by the first compute device or the first TPQ is a TPQ created by the first compute device based on a required capacity, the required capacity is a capacity required by the first compute device to buffer one or more task descriptors, each task descriptor comprises address information of to-be-transmitted data, and the to-be-transmitted data is data to be transmitted by the first compute device to the second compute device; and
buffering, by the first compute device, the one or more task descriptors into the first TPQ.

2. The method according to claim 1, wherein the method further comprises:
determining, by the first compute device, that the first TP connection is associated with a second TPQ, and obtaining a storage capacity of the second TPQ;
determining, by the first compute device, that the storage capacity of the second TPQ is less than the required capacity; and
establishing, by the first compute device, the association between the first TP connection and the first TPQ, and buffering the one or more task descriptors into the first TPQ.

3. The method according to claim 2, wherein before establishing, by the first compute device, the association between the first TP connection and the first TPQ, the method further comprises:
deleting, by the first compute device, configuration information that is of the second TPQ and that is recorded in a first transport context TPC corresponding to the first TP connection, wherein each TP connection is associated with a TPC, the TPC is used to record configuration information of a TPQ associated with the corresponding TP connection, and the configuration information comprises a start address and a storage capacity of the TPQ.

4. The method according to any one of claims 1 to 3, wherein the first compute device establishes N TP connections to another compute device, and creates M TPQs, wherein M is less than N, and the first TPQ and the second TPQ are among the M TPQs; and
establishing the association between the first TP connection and the first TPQ comprises:
obtaining, by the first compute device, TPQs in an idle state, and determining the first TPQ based on the required capacity and a storage capacity of each TPQ in the idle state, wherein a storage capacity of the first TPQ is greater than or equal to the required capacity, and the TPQ in the idle state is a TPQ that is not associated with a TP connection; and
writing, by the first compute device, configuration information of the first TPQ into the first TPC corresponding to the first TP connection, wherein each TP connection corresponds to a TPC, the TPC is used to record the configuration information of the TPQ associated with the corresponding TP connection, and the configuration information comprises the start address and the storage capacity of the TPQ.

5. The method according to any one of claims 1 to 3, wherein establishing the association between the first TP connection and the first TPQ comprises:
creating, by the first compute device, the first TPQ based on the required capacity of the one or more task descriptors, and writing configuration information of the first TPQ into the first TPC corresponding to the first TP connection, wherein each TP connection corresponds to a TPC, the TPC is used to record the configuration information of the TPQ associated with the corresponding TP connection, and the configuration information comprises the start address and the storage capacity.

6. The method according to claim 4 or 5, wherein after buffering, by the first compute device, the one or more task descriptors into the first TPQ, the method further comprises:
determining, by the first compute device, that there is no task descriptor in the first TPQ, and deleting the configuration information that is of the first TPQ and that is recorded in the first TPC.

7. The method according to claim 4 or 5, wherein after buffering, by the first compute device, the one or more task descriptors into the first TPQ, the method further comprises:
determining, by the first compute device, that there is no task descriptor in the first TPQ and a first quantity of TPQs currently in an idle state is less than a first threshold, and deleting the configuration information that is of the first TPQ and that is recorded in the first TPC.

8. The method according to claim 4 or 5, wherein after buffering, by the first compute device, the one or more task descriptors into the first TPQ, the method further comprises:
determining, by the first compute device, that there is no task descriptor in the first TPQ and no new task descriptor is buffered in the first TPQ within a first duration, and deleting the configuration information that is of the first TPQ and that is recorded in the first TPC.

9. A data processing method, applied to a network comprising a plurality of compute devices, wherein one or more transport TP connections are established between any two of the plurality of compute devices, the TP connection is used for communication between the two compute devices, and the method comprises:
determining, by a first compute device, whether a first TP connection is associated with a transport queue TPQ, wherein the first TP connection is one of TP connections established between the first compute device and a second compute device, and the first compute device and the second compute device are among the plurality of compute devices;
determining, by the first compute device, that the first TP connection is associated with a second TPQ, and obtaining a storage capacity of the second TPQ;
determining, by the first compute device, that the storage capacity of the second TPQ is less than a required capacity, and establishing an association between the first TP connection and a first TPQ, wherein the first TPQ is one of one or more TPQs that have been created by the first compute device or the first TPQ is a TPQ created by the first compute device based on the required capacity, the required capacity is a capacity required by the first compute device to buffer one or more task descriptors, each task descriptor comprises address information of to-be-transmitted data, and the to-be-transmitted data is data to be transmitted by the first compute device to the second compute device; and
buffering, by the first compute device, the one or more task descriptors into the first TPQ.

10. The method according to claim 9, wherein the first compute device establishes N TP connections to another compute device, and creates M TPQs, wherein M is less than N, and the first TPQ and the second TPQ are among the M TPQs; and
establishing the association between the first TP connection and the first TPQ comprises:
obtaining, by the first compute device, TPQs in an idle state, and determining the first TPQ based on the required capacity and a storage capacity of each TPQ in the idle state, wherein a storage capacity of the first TPQ is greater than or equal to the required capacity, and the TPQ in the idle state is a TPQ that is not associated with a TP connection; and
writing, by the first compute device, configuration information of the first TPQ into a first transport context TPC corresponding to the first TP connection, wherein each TP connection corresponds to a TPC, the TPC is used to record configuration information of a TPQ associated with the corresponding TP connection, and the configuration information comprises a start address and a storage capacity.

11. The method according to claim 9, wherein establishing the association between the first TP connection and the first TPQ comprises:
creating, by the first compute device, the first TPQ based on the required capacity of the one or more task descriptors, and writing configuration information of the first TPQ into a first TPC corresponding to the first TP connection, wherein each TP connection corresponds to a TPC, the TPC is used to record configuration information of a TPQ associated with the corresponding TP connection, and the configuration information comprises a start address and a storage capacity.

12. The method according to claim 10 or 11, wherein before establishing the association between the first TP connection and the first TPQ, the method further comprises:
deleting, by the first compute device, configuration information that is of the second TPQ and that is recorded in the first TPC.

13. The method according to any one of claims 9 to 12, wherein after buffering, by the first compute device, the one or more task descriptors into the first TPQ, the method further comprises:
determining, by the first compute device, that there is no task descriptor in the first TPQ, and deleting the configuration information that is of the first TPQ and that is recorded in the first TPC.

14. The method according to any one of claims 9 to 12, wherein after buffering, by the first compute device, the one or more task descriptors into the first TPQ, the method further comprises:
determining, by the first compute device, that there is no task descriptor in the first TPQ and a first quantity of TPQs currently in an idle state is less than a first threshold, and deleting the configuration information that is of the first TPQ and that is recorded in the first TPC, wherein the TPQ in the idle state is a TPQ that is not associated with a TP connection.

15. The method according to any one of claims 9 to 12, wherein after buffering, by the first compute device, the one or more task descriptors into the first TPQ, the method further comprises:
determining, by the first compute device, that there is no task descriptor in the first TPQ and no new task descriptor is buffered in the first TPQ within a first duration, and deleting the configuration information that is of the first TPQ and that is recorded in the first TPC.

16. A data processing method, applied to a network comprising a plurality of compute devices, wherein one or more transport TP connections are established between any two of the plurality of compute devices, the TP connection is used for communication between the two compute devices, and the method comprises:
receiving, by a first compute device via a second TP connection, a first packet sent by a third compute device, wherein the first packet comprises to-be-written data, and the second TP connection is one of TP connections established between the first compute device and the third compute device;
determining, by the first compute device, that the second TP connection is not associated with any TPQ, and establishing an association between the second TP connection and a third TPQ, wherein the third TPQ is one of one or more TPQs that have been created by the first compute device, or the third TPQ is created by the first compute device after the first compute device determines that the second TP connection is not associated with any TPQ;
writing, by the first compute device, the to-be-written data into storage space, and generating first completion information corresponding to the first packet, wherein the first completion information indicates that the to-be-written data has been written into the storage space; and
buffering, by the first compute device, the first completion information into the third TPQ.

17. The method according to claim 16, wherein the first compute device establishes N TP connections to another compute device, and creates K TPQs used to buffer completion information, wherein K is less than N, and the third TPQ belongs to the K TPQs; and
establishing the association between the second TP connection and the third TPQ comprises:
selecting, by the first compute device, the third TPQ from TPQs in an idle state, wherein the TPQ in the idle state is a TPQ that is not associated with a TP connection; and
writing configuration information of the third TPQ into a second TPC corresponding to the second TP connection, wherein each TP connection corresponds to a TPC, the TPC is used to record configuration information of a TPQ associated with the corresponding TP connection, and the configuration information comprises a start address and a storage capacity of the TPQ.

18. The method according to claim 16, wherein establishing the association between the second TP connection and the third TPQ comprises:
creating, by the first compute device, the third TPQ, and writing configuration information of the third TPQ into a first TPC corresponding to the first TP connection, wherein each TP connection corresponds to a TPC, the TPC is used to record configuration information of a TPQ associated with the corresponding TP connection, and the configuration information comprises a start address and a storage capacity.

19. A data processing apparatus, used in a first compute device and comprising:
a processing module, configured to determine whether a first TP connection is associated with a transport queue TPQ, wherein the first TP connection is one of TP connections established between the first compute device and a second compute device, wherein
the processing module is further configured to: determine that the first TP connection is not associated with any TPQ, and send a first application request to a queue management module, wherein the first application request is used to apply to the queue management module for a TPQ; and
the queue management module, configured to return an identifier of a first TPQ to the processing module after receiving the first application request, wherein the first TPQ is one of one or more TPQs that have been created by the queue management module or the first TPQ is a TPQ created by the queue management module based on a required capacity, the required capacity is a capacity required by the first compute device to buffer one or more task descriptors, each task descriptor comprises address information of to-be-transmitted data, and the to-be-transmitted data is data to be transmitted by the first compute device to the second compute device, wherein
the processing module is further configured to: establish an association between the first TP connection and the first TPQ, and buffer the one or more task descriptors into the first TPQ.

20. The apparatus according to claim 19, wherein
the processing module is further configured to: determine that the first TP connection is associated with a second TPQ, and obtain a storage capacity of the second TPQ; and
determine that the storage capacity of the second TPQ is less than the required capacity, and send a second application request to the queue management module, wherein the second application request is used to apply to the queue management module for a TPQ;
the queue management module is configured to return the identifier of the first TPQ to the processing module, wherein a storage capacity of the first TPQ is greater than or equal to the required capacity, and the TPQ in an idle state is a TPQ that is not associated with a TP connection; and
the processing module is further configured to: establish the association between the first TP connection and the first TPQ, and buffer the one or more task descriptors into the first TPQ.

21. The apparatus according to claim 20, wherein the processing module is further configured to:
delete configuration information that is of the second TPQ and that is recorded in a first transport context TPC corresponding to the first TP connection, wherein each TP connection is associated with a TPC, the TPC is used to record configuration information of a TPQ associated with the corresponding TP connection, and the configuration information comprises a start address and a storage capacity of the TPQ.

22. The apparatus according to any one of claims 19 to 21, wherein the first compute device establishes N TP connections to another compute device, and creates M TPQs, wherein M is less than N, and the first TPQ and the second TPQ are among the M TPQs;
the queue management module is specifically configured to:
obtain TPQs in an idle state, determine the first TPQ based on the required capacity and a storage capacity of each TPQ in the idle state, and return the identifier of the first TPQ to the processing module, wherein the storage capacity of the first TPQ is greater than or equal to the required capacity, and the TPQ in the idle state is a TPQ that is not associated with a TP connection; and
the processing module is specifically configured to:
write configuration information of the first TPQ into the first TPC corresponding to the first TP connection, wherein each TP connection corresponds to a TPC, the TPC is used to record the configuration information of the TPQ associated with the corresponding TP connection, and the configuration information comprises the start address and the storage capacity of the TPQ.

23. The apparatus according to any one of claims 19 to 21, wherein
the queue management module is specifically configured to:
create the first TPQ based on the required capacity of the one or more task descriptors, and return the identifier of the first TPQ to the processing module, wherein the storage capacity of the first TPQ is greater than or equal to the required capacity; and
the processing module is specifically configured to:
write configuration information of the first TPQ into the first TPC corresponding to the first TP connection, wherein each TP connection corresponds to a TPC, the TPC is used to record the configuration information of the TPQ associated with the corresponding TP connection, and the configuration information comprises the start address and the storage capacity of the TPQ.

24. A data processing apparatus, used in a first compute device and comprising:
a processing module, configured to determine whether a first TP connection is associated with a transport queue TPQ, wherein the first TP connection is one of TP connections established between the first compute device and a second compute device, wherein
the processing module is further configured to: determine that the first TP connection is associated with a second TPQ, and obtain a storage capacity of the second TPQ; and
determine that the storage capacity of the second TPQ is less than a required capacity, and send a second application request to a queue management module, wherein the second application request is used to apply to the queue management module for a TPQ, the required capacity is a capacity required by the first compute device to buffer one or more task descriptors, each task descriptor comprises address information of to-be-transmitted data, and the to-be-transmitted data is data to be transmitted by the first compute device to the second compute device; and
the queue management module, configured to return an identifier of a first TPQ to the processing module, wherein a storage capacity of the first TPQ is greater than or equal to the required capacity, wherein
the processing module is further configured to: establish an association between the first TP connection and the first TPQ, and buffer the one or more task descriptors into the first TPQ.

25. A data processing apparatus, used in a first compute device and comprising:
a receiving module, configured to receive, via a second TP connection, a first packet sent by a third compute device, wherein the first packet comprises to-be-written data, and the second TP connection is one of TP connections established between the first compute device and the third compute device;
a processing module, configured to send a third application request to a queue management module upon determining that the second TP connection is not associated with a TPQ, wherein the third application request is used to apply to the queue management module for a TPQ; and
the queue management module, configured to return an identifier of a third TPQ to the processing module after receiving the third application request, wherein the third TPQ is one of one or more TPQs that have been created by the first compute device, or the third TPQ is created by the first compute device after the first compute device determines that the second TP connection is not associated with any TPQ, wherein
the processing module is further configured to: establish an association between the second TP connection and the third TPQ, write the to-be-written data into storage space, and generate first completion information corresponding to the first packet, wherein the first completion information indicates that the to-be-written data has been written into the storage space; and
buffer the first completion information into the third TPQ.

26. The apparatus according to claim 25, wherein the first compute device establishes N TP connections to another compute device, and creates K TPQs used to buffer completion information, wherein K is less than N, and the third TPQ belongs to the K TPQs;
the queue management module is specifically configured to:
select the third TPQ from TPQs in an idle state, and return the identifier of the third TPQ to the processing module, wherein the TPQ in the idle state is a TPQ that is not associated with a TP connection; and
the processing module is specifically configured to:
write configuration information of the third TPQ into a second TPC corresponding to the second TP connection, wherein each TP connection corresponds to a TPC, the TPC is used to record configuration information of a TPQ associated with the corresponding TP connection, and the configuration information comprises a start address and a storage capacity of the TPQ.

27. The apparatus according to claim 25, wherein
the queue management module is specifically configured to:
create the third TPQ, and return the identifier of the third TPQ to the processing module; and
the processing module is specifically configured to:
write configuration information of the third TPQ into a first TPC corresponding to a first TP connection, wherein each TP connection corresponds to a TPC, the TPC is used to record configuration information of a TPQ associated with the corresponding TP connection, and the configuration information comprises a start address and a storage capacity.

28. A chip, wherein the chip comprises a processing unit and a storage unit, the storage unit is configured to store program instructions, and the processing unit is configured to run the program instructions to implement the method according to any one of claims 1 to 8, and/or implement the method according to any one of claims 9 to 15, and/or implement the method according to any one of claims 16 to 18.

29. A compute device, comprising a processor, a memory, and a chip, wherein the memory is configured to store instructions, the processor is configured to execute the instructions stored in the memory to implement a service function of the compute device, and the chip is configured to implement the method according to any one of claims 1 to 8, and/or implement the method according to any one of claims 9 to 15, and/or implement the method according to any one of claims 16 to 18.

30. A computer-readable storage medium, comprising computer program instructions, wherein when the computer program instructions are executed by a compute device, the compute device is caused to perform the method according to any one of claims 1 to 8, and/or the compute device is caused to perform the method according to any one of claims 9 to 15, and/or the compute device is caused to perform the method according to any one of claims 16 to 18.
